# EUROPEAN PATENT APPLICATION

(11) **EP 3 037 391 A1**
(43) Date of publication of application: **29.06.2016**
(21) Application number: 14307143.9
(22) Date of filing: 22.12.2014
(51) Int. Cl.: C03B 5/237, C03B 5/235, F27B 3/26, F27D 17/00, F23L 15/04, F28D 21/00

(54) **Energy-efficient process and installation for melting vitrifiable material in a flame fired furnace**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Jarry, Luc, 61270 Beaufai (FR); Joumani, Youssef, 78121 Crespieres (FR); Leroux, Bertrand, 91650 Breuillet (FR); Tsiava, Rémi, 91250 Saint Germain-les-Corbeil (FR); Wagner, Marc, 94100 Saint Maur des Fosses (FR); Beasse, Grégoire, 75014 Paris (FR)
(74) Representative: De Vleeschauwer, Natalie Y.L.D.

(57) **Abstract**

Process for melting vitrifiable material in a flame-fired melting furnace (1) comprising the steps of:
(a) heating a heat transfer fluid to a temperature of at least 600°C, preferably of between 600°C and 800°C, by heat exchange between the heat transfer fluid and hot flue gas from the furnace at a temperature of at least 1100°C, preferably of between 1100°C and 1500°C to
(b) preheating at least one of the reactants selected from oxygen-rich oxidant and fuel by heat exchange between said at least one reactant and the heat transfer fluid heated in step (a), so as to obtain a preheated reactant and a tempered heat transfer fluid at a temperature of at most 650°C, preferably from 200°C to 650°C,
(c) supplying the preheated reactant obtained in step (b) as a combustion reactant to the furnace (1),
(d) supplying the tempered heat transfer fluid obtained in step (b) as a heat source to a Rankine cycle so as to generate mechanical power therefrom.

## Description

The present invention relates to processes and installations for melting vitrifiable material in a flame-fired furnace, such as, in particular, a glass-melting furnace.

Traditionally, flame-fired furnaces for melting vitrifiable material are operated with air as the combustion oxidant, whereby said air may be preheated upstream of the furnace by heat exchange with hot flue gas from the furnace in a regenerator or recuperator.

More recently, the efficiency of furnaces for melting vitrifiable material has been improved by partially or totally substituting the combustion air with oxygen-enriched air or oxygen.

In order to reduce the production costs of molten glass in glass-melting furnaces using oxygen-enriched air or oxygen, it has been proposed in inter alia US-A-6071116 and US-B-6250916, to preheat said oxygen-enriched air or oxygen before its introduction into the glass-melting furnace by means of the residual heat present in the flue gas from the glass-melting furnace. At the start of the heat-recovery process, the temperature of the flue gas is typically from 1100°C to 1650°C.

At the end of the heat-recovery process, the temperature of the oxygen-rich oxidant can be from 300°C to 650°C. For reasons of security and reliability, thermal energy is not transferred directly from the hot flue gas to the oxidant, as is the case in combustion air recuperators, but is instead transferred from the hot flue gas to the oxygen-rich combustion oxidant via an intermediate heat transfer fluid, such as air, thereby ensuring that no direct contact can take place between the hot flue gas and the highly active oxygen-rich oxidant, in spite of possible erosion or corrosion of the heat exchange equipment in contact with the particle-laden flue gas and corrosive (hot) oxygen-rich oxidant.

An alternative method of reducing operation costs of industrial processes in which oxygen-enhanced combustion is used, such as cement production, steel reheat applications, glass production, aluminium and copper melting and any industrial process that uses flame-fired process heaters or furnaces, is described in US-A-2009/0308073, whereby waste heat generated by the industrial process is sent as a heat source to an alternative Rankine cycle which converts said waste heat to power.

An intermediate fluid such as thermal oil, air or pressurized water, may be employed to transfer recoverable heat from the heat source to the working fluid of the alternative Rankine cycle. According to US-A-2009/0308073, the heat source can be a liquid or gas stream produced either as flue gas as a direct result of oxygen-enhanced combustion or as any stream utilized for cooling within the industrial process itself in order to meet the process needs. The temperature of the heat source is below 600°C, preferably between 400°C and 100°C. The examples relate to cement plants generating kiln exhaust gases with a temperature of 332°C and clinker cooler exhaust gases with a temperature of respectively 403°C and 440°C, as well as to a steel reheat furnace generating a waste heat stream at a temperature of 482°C.

The above method is clearly not suited for efficient power generation from the flue gas of a glass-melting furnace which, as indicated above, leaves the furnace at temperatures well above 1000°C.

It is an aim of the present invention to provide an improved method of valorizing waste heat present in the flue gas from a flame-fired furnace for melting vitrifiable material which is operated with an oxygen-rich combustion oxidant.

According to the invention, this is achieved by means of the process for melting vitrifiable material such as glass in a flame-fired melting furnace in accordance with the present invention. Said process comprises the following steps:
(a) heating a heat transfer fluid by heat exchange between the heat transfer fluid and hot flue gas from the furnace;
(b) preheating at least one of the reactants selected from oxygen-rich oxidant and fuel by heat exchange between said at least one reactant and the heat transfer fluid heated in step (a), so as to obtain a preheated reactant and a tempered heat transfer fluid;
(c) supplying the preheated reactant obtained in step (b) as a combustion reactant to the furnace; and
(d) supplying the tempered heat transfer fluid obtained in step (b) as a heat source to a Rankine cycle so as to generate mechanical power therefrom.

Further particulars of the process according to the invention are that:
- in step (a), the temperature of the hot flue gas before heat exchange with the heat transfer fluid is at least 1000°C, preferably between 1000°C and 1350°C ;
- in step (a), the heat transfer fluid is heated to a temperature of at least 600°C, preferably of between 600°C and 800°C; and
- in step (b), the temperature of the tempered heat transfer fluid is at most 400°C, preferably from 200°C to 400°C.

With the process according to the invention, exploitation of the heat present in the hot flue gas evacuated from the furnace is optimized and maximized. This is in particular achieved in that, due to the specific selection and order of the process steps, it becomes possible to use the heat transfer fluid as a heat-source fluid over a wider temperature range of the heat transfer fluid than was previously the case.

In the present context, the term "oxygen-rich oxidant" refers to an oxidant having an oxygen content higher than that of air, preferably containing from 50%vol to 100%vol oxygen.

The term "heat exchange" between two fluids refers to the transfer of heat from one fluid (the heat-source fluid) to a second fluid (the fluid to be heated) without any direct contact or mixing between the two fluids.

The term "heat exchanger" refers to a heating installation or a heating device in which a heat-source fluid, which introduces heat into the heat exchanger, and a fluid to be heated circulate in distinct enclosures or circuits, i.e. without any direct contact or mixing between said fluids, and in which heat is transferred from the heat-source fluid to the fluid to be heated across one or more walls separating the distinct disclosures or circuits.

In the present context, two elements are "in fluid connection" with one another when they are connected so as to enable a fluid to flow from one of the elements to the other, typically by one or more fluid transport conduits.

The term "condensibles" refers to substances present in the furnace flue gas which liquefy or solidify at temperatures in the range from 300°C to 1000°C at pressures in the range of 900 mbar to 1100 mbar. Sodium sulfate, borates and fluorides are examples of such condensibles which may be present in flue gas from a glass-melting furnace.

The term "preheating" refers to the heating of a vitrifiable material or of a combustion reactant before it is introduced into a furnace.

In step (a) of the process of the invention, the hot flue gas is the heat-source fluid and the heat transfer fluid is the fluid to be heated. In step (a), the heat transfer fluid is heated by heat exchange with the hot flue gas in a heat exchanger, known in the art as a "recuperator", and hereafter referred to as the primary heat exchanger.

In step (b), the heated heat transfer fluid is the heat-source fluid and the reactant is the fluid to be heated.

It is an advantage of the present invention that thermal energy recovered from the hot flue gas can be used for the optimization of the melting process in the furnace.

According to one advantageous embodiment, the heating of the heat transfer fluid in step (a) and the preheating of the reactant in step (b) take place in separate heat transfer installations. In that case, the heating of the heat transfer fluid takes place in the abovementioned primary heat exchanger, whereas the preheating of the reactant takes place in a separate heat exchanger hereafter referred to as "secondary heat exchanger".

The heat transfer fluid is preferably a gaseous heat transfer fluid. Examples of useful gaseous heat transfer fluids are air, CO₂, N₂ or mixtures of at least two of these gases. Air is usually preferred as a heat transfer fluid due to its safety and availability.

Step (b) preferably includes preheating both oxygen-rich oxidant and fuel. Both the preheated oxygen-rich oxidant and the preheated fuel are then advantageously supplied as combustion reactants to the furnace in step (c) of the process.

Two distinct secondary heat exchangers may be used for preheating the reactants: a secondary oxidant heat exchanger for preheating the oxygen-rich oxidant and a secondary fuel heat exchanger for preheating the fuel.

The secondary oxidant heat exchanger and the secondary fuel heat exchanger may be disposed in series or in parallel (with respect to the flow of the heat transfer fluid). They are preferably disposed in series with the secondary oxidant heat exchanger advantageously preceding the secondary fuel heat exchanger.

It is also possible to preheat oxygen-rich oxidant and fuel in one specifically designed secondary heat exchanger, such a secondary heat exchanger having separate circulation or flow paths for the oxygen-rich oxidant and for the fuel.

Fuels suitable for use in the process according to the invention include gaseous fuels, such as natural gas, wood gas, coal gas or syngas, liquid fuels, such as fuel oil, including light and heavy fuel oil, and solid fuels, such as particulate coal and petcoke. A combination of different fuels may also be burnt in the furnace. Solid fuels are typically injected into the furnace as fluid-propelled or fluid-entrained particulate solid fuel, whereby the fluid may be liquid or gaseous. In that case, the preheating of the fuel in step (b) of the process may take the form of preheating the fluid-entrained solid fuel as such, for example, in the case of a liquid-entrained solid fuel, the preheating of the slurry, or, alternatively, the form of preheating the gaseous or liquid entrainment fluid before it is used to propel or entrain the particulate solid fuel.

When liquid fuel is injected into the furnace by means of gas-assisted atomization, the preheating of the fuel in step (b) of the process may take the form of preheating the liquid fuel before its atomization, the preheating of the gas before it is used for the atomization gas-assisted atomization of the liquid fuel, or the preheating of both the liquid fuel and the gas. When the liquid fuel is highly viscous, preheating the liquid fuel also has the advantage of lowering its viscosity.

The oxygen-rich oxidant advantageously has an oxygen content of from 80%vol to 100%vol, preferably of at least 90%vol, more preferably of at least 95%vol, most preferably of at least 98%vol.

Examples of temperature ranges to which a combustion reactant may be preheated in step (b) are listed in table 1.

**Table 1**

| **Reactant** | **Preheating Temperature [°C]** |
|---|---|
| Oxidant with 70 to 89%vol oxygen | 300°C to 700°C |
| Oxidant with 90 to 100%vol oxygen | 300°C to 650°C |
| Natural gas | 200°C to 550°C |

When the fuel is a gaseous fuel, it is preferably preheated to at least 400°C in step (b). When the fuel is a liquid fuel, the liquid fuel is itself preferably preheated to at least 100°C. The maximum preheating temperature of the fuel is selected so that it is below the temperatures at which the fuel in question is subjected to thermal degradation, for example by fuel cracking.

Different types of Rankine cycles may be used in the process according to the invention. The Rankine cycle may, for example, use water/steam as its working fluid. The Rankine cycle may also use an organic fluid, such as n-pentane or toluene, as its working fluid. The nature of the working fluid is typically selected in function of the temperature range in which the Rankine cycle must operate, this temperature being at least in part determined by the temperature of the tempered heat-transfer fluid which is supplied as heat-source fluid to the Rankine cycle in step (d). In said step (d), the tempered heat-transfer fluid typically heats the working fluid of the Rankine cycle, i.e. the fluid to be heated, in a further heat exchanger, referred to as "tertiary heat exchanger".

The mechanical power generated by the Rankine cycle in step (d) may advantageously be used to produce electricity. This electricity may be used in a wide range of applications.

As mentioned before, it is preferred to use energy recovered from the hot flue gas to improve the melting process in the furnace, thereby reducing the energy requirements/dependency of the furnace. Thereto, at least part of the electricity produced may be used to generate electric boosting in the glass-melting furnace and is therefore supplied to electric boosting electrodes in the furnace.

The mechanical power generated by the Rankine cycle may also be used to compress the oxygen-rich oxidant before it is supplied to the furnace or, if the oxygen-rich oxidant is preheated in step (c), before the oxidant is preheated.

The process of the present invention is suitable for essentially all types flame-fired glass-melting furnaces, such as furnaces for the production of flat glass, furnaces for the production of container glass, for the production of glass tableware, etc., and for all sizes of flame-fired glass-melting furnaces, for example with pull rates ranging from 100 to 800 tpd of molten glass.

The present invention also relates to an installation for melting vitrifiable material, such as glass, suitable for use in the process as described above.

Said installation for melting vitrifiable material comprises a flame-fired melting furnace having a flue gas exhaust, at least one fuel inlet and at least one combustion oxidant inlet. The installation also comprises a primary heat exchanger having a flue gas inlet, a flue gas outlet, a heat transfer fluid inlet and a heat transfer fluid outlet. The installation further includes a secondary heat exchanger having a heat transfer fluid inlet, a heat transfer fluid outlet, a reactant inlet and a reactant outlet. In addition, a Rankine cycle for generating mechanical power and operating with a working fluid and comprising a tertiary heat exchanger is also part of the installation according to the invention.

The primary heat exchanger is adapted to heat the heat transfer fluid by heat exchange with the flue gas from the furnace.

Thereto, the flue gas inlet of the primary heat exchanger is in fluid connection with the flue gas exhaust of the furnace. Its heat transfer fluid inlet is in fluid connection with a source of heat transfer fluid.

The secondary heat exchanger is adapted to preheat at least one reactant selected from oxygen-rich oxidant and fuel by heat exchange with the heat transfer fluid. Thereto, the heat transfer fluid inlet of the secondary heat exchanger is in fluid connection with the heat transfer fluid outlet of the primary heat exchanger. The reactant inlet of the secondary heat exchanger is in fluid connection with a source of the reactant. If the reactant is oxygen-rich oxidant, the reactant outlet of the secondary heat exchanger is in fluid connection with a combustion oxidant inlet of the furnace, for example, a combustion oxidant inlet of one or more burners of the furnace. If the reactant is fuel, the reactant outlet of the secondary heat exchanger is in fluid connection with a fuel inlet of the furnace.

The secondary heat exchanger may also comprise multiple reactant inlets and multiple reactant outlets, for example an oxygen-rich oxidant inlet in fluid connection with a source of oxygen-rich oxidant and an oxygen-rich oxidant outlet in fluid connection with a combustion oxidant inlet of the furnace, as well as a fuel inlet in fluid connection with a fuel source and a fuel outlet in fluid connection with a fuel inlet of the furnace.

As explained above with respect to the process according to the invention, when the fuel is a fluid-entrained or fluid-propelled particulate solid fuel, the secondary heat exchanger may comprise an inlet for the fluid-entrained or - propelled solid fuel in fluid connection with a source of fluid-propelled or -entrained solid fuel and an outlet for said fluid-entrained or -propelled solid fuil in fluid connection with a fuel inlet of the furnace. Alternatively, the secondary heat exchanger may comprise an inlet for the entrainment fluid used for entraining or propelling the solid fuel in fluid connection with a source of said entrainment fluid and an outlet for said entrainment fluid, whereby said fluid outlet is in fluid connection with a fuel inlet of the furnace via a device for mixing the fluid with the particulate solid fuel.

When the fuel is a liquid fuel, the secondary heat exchanger may comprise an inlet for the liquid fuel in fluid connection with a source of said liquid fuel and a liquid fuel outlet in fluid connection with a fuel inlet of the furnace, said fuel inlet being typically equipped with an atomizer for generating a spray of the preheated liquid fuel, whereby said atomizer may be gas assisted or not. Alternatively or in combination with the above, when a gas-assisted atomizer is used for generating a spray of liquid fuel in the furnace, the secondary heat exchanger may comprise an inlet for the atomization gas used for generating said spray, in fluid connection with a source of said atomization gas, as well as an outlet for said atomization gas, whereby said gas outlet is in fluid connection via a fuel inlet of the furnace equipped with a gas-assisted fuel atomizer.

The tertiary heat exchanger of the Rankine cycle is adapted for heating the working fluid by heat exchange with the heat transfer fluid. Said tertiary heat exchanger presents a heat transfer fluid inlet, a heat transfer fluid outlet, a working fluid inlet and a working fluid outlet.

The heat transfer fluid inlet of the tertiary heat exchanger is in fluid connection with the heat transfer fluid outlet of the secondary heat exchanger.

Specific embodiments described hereabove with respect to the process of the invention also apply to the installation of the invention.

Thus, the source of heat transfer fluid may be a source of a heat transfer fluid selected among the group of air, CO₂, N₂ or mixtures of at least two of gases.

The source of heat transfer fluid is advantageously a source of a gaseous heat transfer fluid. For example, when the heat transfer fluid is air, the source of heat transfer fluid may be an air pump or compressor with which the heat-transfer fluid inlet of the primary heat exchanger is in fluid connection.

According to one embodiment of the installation according to the invention, the secondary heat exchanger is adapted to preheat both oxygen-rich oxidant and fuel by heat exchange with the heat-transfer fluid. Said secondary heat exchanger has a first reactant inlet and a second reactant inlet, as well as a first reactant outlet and a second reactant outlet. The first reactant inlet is in fluid connection with a source of oxygen-rich oxidant. The first reactant outlet is in fluid connection with a combustion oxidant inlet of the furnace. The second reactant inlet is in fluid connection with a fuel source. The second reactant outlet is in fluid connection with a fuel inlet of the furnace.

According to another embodiment, the oxygen-rich oxidant and the fuel are preheated in separate heat exchangers. The installation then comprises a first secondary heat exchanger which is secondary oxidant heat exchanger and a second secondary heat exchanger which is secondary fuel heat exchanger. The first secondary oxidant heat exchanger has a reactant inlet in fluid connection with a source of oxygen-rich oxidant as well as a reactant outlet in fluid connection with a combustion inlet of the furnace. The second secondary heat exchanger has a reactant inlet in fluid connection with a source of fuel and a reactant outlet in fluid connection with a fuel inlet of the furnace.

As mentioned above, the secondary oxidant heat exchanger and the secondary fuel heat exchanger may be disposed in parallel or in series with respect to the flow of the heat transfer fluid. A disposition in series is considered particularly useful, especially when the secondary oxidant heat exchanger precedes the secondary fuel heat exchanger.

The source of fuel is a source of gaseous fuel, of liquid fuel or of solid fuel. When the fuel is to be preheated in a secondary heat exchanger, the fuel to be preheated is preferably a gaseous fuel or a liquid fuel.

The source of oxygen-rich oxidant is a source of an oxidant having an oxygen content higher than that of air and advantageously between 50%vol and 100%vol. The oxygen-rich oxidant supplied by said source usefully has an oxygen content of at least 80%vol%vol, preferably of at least 90%vol, more preferably of at least 95%vol and most preferably of at least 98%vol.

Examples of such sources are air separation units, oxygen pipelines and liquid-oxygen reservoirs.

The working fluid of the Rankine cycle may be water/steam. It may also be an organic working fluid.

The nature of the working fluid is selected in function of the temperature range at which the Rankine cycle operates, certain organic working fluids being, for example, particularly efficient for Rankine cycles operating at lower temperature ranges.

Part or all of the mechanical power generated by the Rankine cycle may be used to compress the oxygen-rich oxidant before it is supplied as a combustion reactant to the furnace. When, as is preferred, the oxygen-rich oxidant is preheated in step (b) of the process, said mechanical power is preferably used to compress the oxygen-rich oxidant before it is preheated. Indeed, certain sources of oxygen-rich oxidant such as VSA (Vacuum Swing Adsoption) air separation units frequently generate oxydant-rich oxidant at a pressure which is too low for the use of said oxygen-rich oxidant as a combustion reactant in the furnace.

The installation according to the invention may also include an electricity generator. The Rankine cycle is then connected to the electricity generator which is adapted to transform at least part of the mechanical power generated by the Rankine cycle into electricity. In that case, the furnace of the installation preferably comprises electrical boost electrodes, the electricity generator being connected to the boosting electrodes for supplying electricity thereto.

If sufficient mechanical energy is generated by the Rankine cycle and depending on the level of electric-boosting, said mechanical energy may be used both to compress oxygen-rich oxidant and for generating electricity to be supplied to electric boost electrodes.

The installation is of particular interest when the furnace is a glass-melting furnace. As mentioned above, the present invention is applicable to essentially all flame-fired glass-melting furnaces. A glass-melting furnace of the installation may thus be a furnace for the production of flat glass, a furnace for the production of container glass, a furnace for the production of glass tableware, etc. The pull rate of such a glass-melting furnace may, for example, range from 100 to 800 tpd of molten glass.

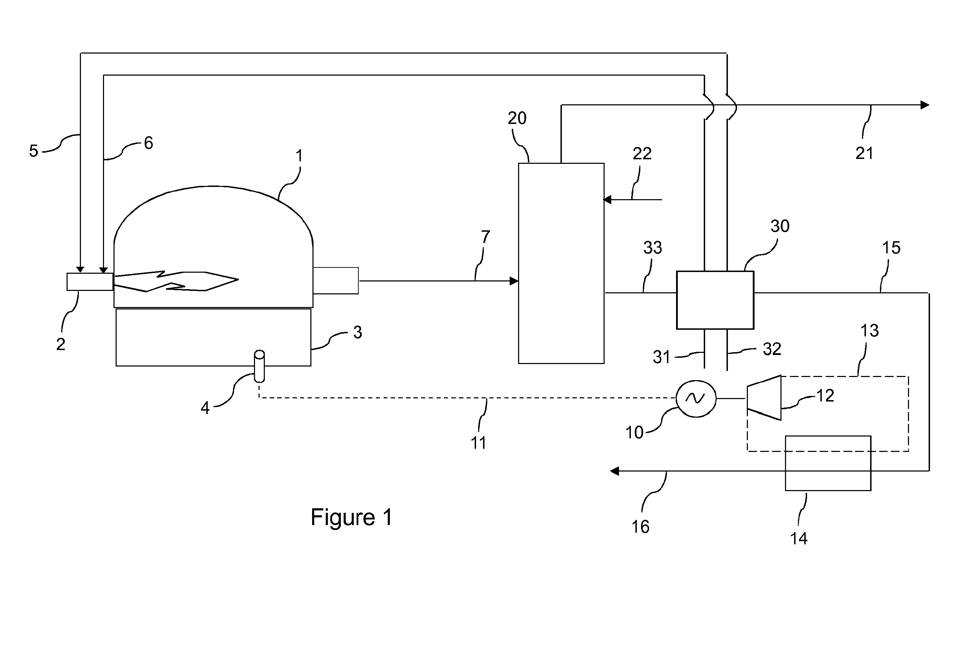

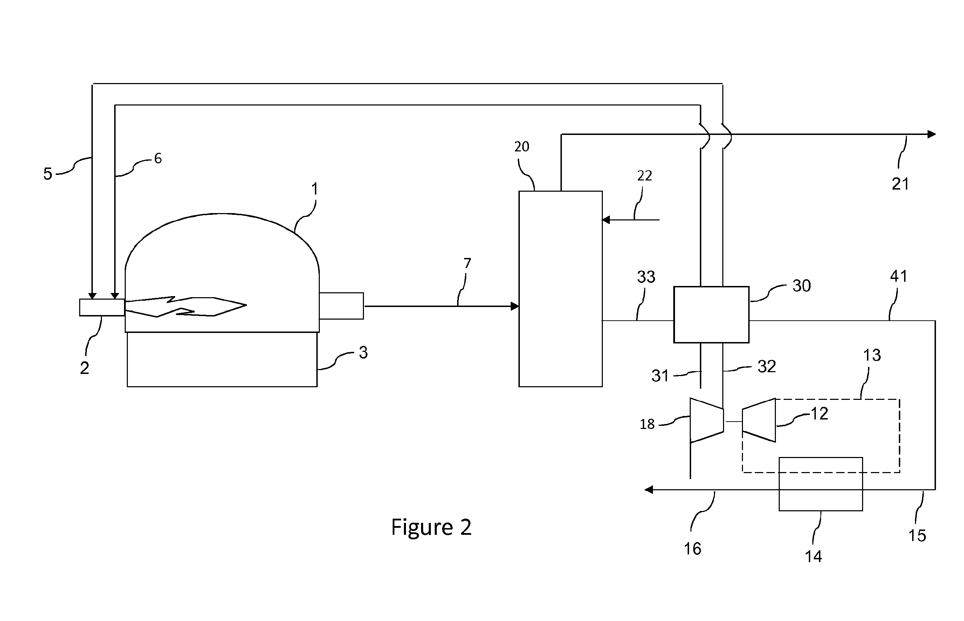

The present invention and its advantage are illustrated in the following examples, reference being made to figures 1 and 2 which are schematic representations of glass-melting installations according to the present invention.

Figure 1 shows a flame-fired glass-melting furnace 1. Said furnace is equipped with a number of oxy-fuel burners 2 (only one burner is show). The flue gas 7 evacuated from furnace 1 is supplied to the flue gas inlet of primary heat exchanger 20. Simultaneously, a heat transfer fluid 22 (in casu air) is supplied to primary heat exchanger 20 via a heat transfer fluid inlet.

Inside primary heat exchanger 20, said heat transfer fluid 22 is heated to a temperature of 700°C by heat exchange with hot flue gases 7.

The tempered flue gas 21 leaves primary heat exchanger 20 via its flue-gas outlet and is sent to a flue gas treatment installation (not shown) before being sent to the stack (not shown). The heated heat-transfer fluid 33 is evacuated from primary heat exchanger 20 via its heat-transfer fluid outlet and introduced into secondary heat exchanger 30 via the heat-transfer fluid inlet of the latter.

Secondary heat exchanger 30 is a multiflux heat exchanger having an oxidant inlet and an oxidant outlet as well as a fuel inlet and a fuel outlet.

In secondary heat exchanger 30, oxygen-rich oxidant 32 having an oxygen content of from 90% vol to 100% vol and gaseous fuel 31 such as natural gas are preheated by heat exchange with the hot heat transfer fluid 33. The thus preheated oxygen-rich oxidant 5 and gaseous fuel 6 are supplied to oxy-burners 2 of the furnace 1 so as to generate combustion and therefore heat within furnace 1, said heat being used to melt solid glass-making materials and generate a glass-melt bath in the glass tank 3 situated in the lower part of furnace 1.

It will be appreciated that, instead of multi-flux heat exchanger 30, it is equally possible to use two distinct secondary heat exchangers (in series or in parallel with respect to the flow of the heat transfer fluid), a first secondary heat exchanger being used to preheat the oxygen-rich oxidant 32, the second secondary heat exchanger being used to preheat the (gaseous) fuel 31.

In accordance with the present invention, the residual heat present in the heat-transfer fluid 15 leaving the secondary heat exchanger, for example at about 400°C, is exploited and used to heat a working fluid 13 of a Rankine cycle in tertiary heat exchanger 14.

By means of the power unit 12 of the Rankine cycle, the heat thus absorbed by working fluid 13 is used to generate mechanical power. Said mechanical power is then transformed into electrical power by electricity generator 10, said electrical power being supplied to the boosting electrodes 4 located in the melt basin 3 of furnace 1 (only a single electrode is shown) so as to provide electric boosting energy to the glass melt, thereby improving the efficiency of the said furnace 1.

Figure 2 shows a glass-melting installation similar to the one shown in figure 1, except that the Ranking cycle is not connected to an electricity generator.

Instead, power unit (expander) 12 of the Rankine cycle is connected by a drive shaft to oxidant compressor 18 which compresses the oxygen-rich oxidant before it is introduced into secondary heat exchanger 30.

It has indeed been found that the present invention makes it possible to use the furnace flue gases not only to enhance the efficiency of the furnace by preheating the combustion reactants, but also to increase the furnace efficiency further by providing at least part and generally all of the electric boosting energy of the melting process and/or of the energy for compressing the oxygen-rich oxidant.

### Example 1

3400 Nm/h industrial oxygen, of 95% purity, at 550°C and 1500 Nm3/h of natural gas (6) at 450°C are supplied to a glass furnace equipped with 10 burners for producing 440 tpd of soda-lime silica glass. The glass tank is also heated with 1600 kWe generated by means of electrodes. The fumes leave the furnace (1) at 1400°C. Following dilution with ambient air, fumes with a volume of 7400 Nm3/h at 1250°C are obtained. Two primary heat exchangers, one located next to each side wall of the furnace, allow heating a stream of 9200 Nm3/h ambiant air to at 700°C. The fumes leave said primary heat-exchangers at 850°C. The generated hot air stream flows into two sets of secondary heat exchangers, one set on each side of the furnace. Each set comprises an oxygen and a natural gas heat-exchanger operated in series. Oxygen and natural gas are supplied by a valve train to the secondary heat-exchangers at a pressure around 100 to 1000 mbars.

The air streams exit the sets of secondary heat exchangers on each side at a temperature of 250°C to 300°C. The residual thermal energy of this air is around 880 kW to 950 kWth.

The organic fluid of the Rankine cycle extracts heat from these air streams at 100°C to 200°C and transforms this extracted heat into mechanical energy in an expander. The electric generator connected to said expander can recover up to 25% of the inlet energy, i.e. 219 kWe. In this case, the Organic Rankine Cycle provides 14% of the electricity needed for electric boosting. At 105 €/MWh, the electricity generated via the Rankine cycle leads to a yearly cost reduction of 202356 €.

## Claims

1. Process for melting vitrifiable material in a flame-fired furnace (1) comprising the steps of:
(a) heating a heat transfer fluid (22) to a temperature of at least 600°C, preferably between 600°C and 800°C, by heat exchange between the heat transfer fluid and hot flue gas (7) from the furnace (1) at a temperature of at least 1100°C, preferably of between 1100°C and 1500°C ;
(b) preheating at least one of the reactants selected from oxygen-rich oxidant (32) and fuel (31) by heat exchange between said at least one reactant (32, 31) and the heat transfer fluid (33) heated in step (a), so as to obtain a preheated reactant (5, 6) and a tempered heat transfer fluid (15) at a temperature of at most 650°C, preferably from 200°C to 650°C,
(c) supplying the preheated reactant (5, 6) obtained in step (b) as a combustion reactant to the furnace (1),
(d) supplying the tempered heat transfer fluid (15) obtained in step (b) as a heat source to a Rankine cycle so as to generate mechanical power therefrom.

2. Process according to claim 1, whereby the heating of the heat transfer fluid in step (a) and the preheating of the reactant in step (b) take place in separate heat transfer installations (20, 30).

3. Process according to any one of the preceding claims, whereby the heat transfer fluid (22, 33, 15) is a gaseous heat transfer fluid.

4. Process according to any one of the preceding claims, whereby step (b) comprises preheating both oxygen-rich oxidant (32) and fuel (31) and whereby in step (c) both the preheated oxygen-rich oxidant (5) and the preheated fuel (6) are supplied as combustion reactants to the furnace (1).

5. Process according to any one of the preceding claims, whereby the oxygen-rich oxidant (32, 5) has an oxygen content of from 80%vol to 100%vol, preferably of at least 90%vol, more preferably of at least 95%vol, most preferably of at least 99%vol.

6. Process according to any one of the preceding claims whereby at least part and preferably all of the mechanical power generated in step (d) is used to compress the oxygen-rich oxidant (32) before the oxygen-rich oxidant is supplied to the furnace (1) as a combustion reactant or, if the oxygen-rich oxidant is preheated in step (b), before the oxygen-rich oxidant (32) is preheated in step (b).

7. Process according to any one of the preceding claims whereby at least part and preferably all of the mechanical power generated in step (d) is used to produce electricity and whereby preferably at least part of the electricity is used to generate electric boosting in the furnace (1).

8. Process for melting glass according to any of the preceding claims.

9. Installation for melting vitrifiable material comprising:
(a) a flame-fired melting furnace (1) having a flue gas exhaust, at least one fuel inlet and at least one combustion oxidant inlet,
(b) a primary heat exchanger (20) having a flue gas inlet, a flue gas outlet, a heat transfer fluid inlet and a heat transfer fluid outlet, the flue gas inlet being in fluid connection with the flue gas exhaust of the furnace (1), the heat transfer fluid inlet being in fluid connection with a source of heat transfer fluid, the primary heat exchanger (20) being adapted to heat the heat transfer fluid (22) by heat exchange with the flue gas (7) from the furnace (1),
(c) a secondary heat exchanger (30) having a heat transfer fluid inlet, a heat transfer fluid outlet, a reactant inlet and a reactant outlet, the heat transfer fluid inlet being in fluid connection with the heat transfer fluid outlet of the primary heat exchanger (20), the reactant inlet being in fluid connection with a source of a reactant selected from oxygen-rich oxidant (32) and fuel (31), the secondary heat exchanger (30) being adapted to preheat the reactant (32, 31) by heat exchange with the heat transfer fluid (33), whereby, if the reactant is fuel (31), the reactant outlet is in fluid connection with a fuel inlet of the furnace (1) and whereby if the reactant is oxygen-rich oxidant (32), the reactant outlet is in fluid connection with a combustion oxidant inlet of the furnace (1),
(d) a Rankine cycle for generating mechanical power and operating with a working fluid (13) and comprising a tertiary heat exchanger (14) having a heat transfer fluid inlet, a heat transfer fluid outlet, a working fluid inlet and a working fluid outlet, the heat transfer inlet of the tertiary heat exchanger (14) being in fluid connection with the heat transfer fluid outlet of the secondary heat exchanger (30), the tertiary heat exchanger (14) being adapted for heating the working fluid (13) by heat exchange with the heat transfer fluid (15).

10. Installation according to claim 9, whereby the source of heat transfer fluid (22) is a source of a gaseous heat transfer fluid.

11. Installation according to claim 9 or 10, whereby the secondary heat exchanger (30) has a first reactant inlet, a second reactant inlet, a first reactant outlet and a second reactant outlet, the first reactant inlet being in fluid connection with a source of oxygen-rich oxidant (32) and the second reactant inlet being in fluid connection with a source of fuel (31), the secondary heat exchanger (30) being adapted to preheat the oxygen-rich oxidant (32) and the fuel (31) by heat exchange with the heat transfer fluid (33), whereby the first reactant outlet is in fluid connection with a combustion oxidant inlet of the furnace (1) and the second reactant outlet is in fluid connection with a fuel inlet of the furnace (1).

12. Installation according to any one of claims 9 to 11, comprising a secondary oxidant heat exchanger and a secondary fuel heat exchanger,
- the secondary oxidant heat exchanger having a reactant inlet in fluid connection with a source of oxygen-rich oxidant and a reactant outlet in fluid connection with a combustion oxidant inlet of the furnace (1),
- the secondary fuel heat exchanger having a reactant inlet in fluid connection with a source of fuel and a reactant outlet in fluid connection with a fuel inlet of the furnace (1).

13. Installation according to any one of claims 9 to 12, whereby the Rankine cycle is connected to a compressor (18) for compressing the oxygen-rich oxidant.

14. Installation according to any one of claims 9 to 13, whereby the Rankine cycle is connected to an electricity generator (10) adapted to transform at least part of the generated mechanical power into electricity, and whereby preferably the furnace (1) comprises electrical boost electrodes (4) and whereby the electricity generator is connected to the boosting electrodes for supplying electricity thereto.

15. Installation according to any one of claims 9 to 14, whereby the furnace (1) is a glass-melting furnace.
